# EUROPÄISCHE PATENTSCHRIFT

(11) **EP 2 365 998 B1**
(45) Veröffentlichungstag und Bekanntmachung des Hinweises auf die Patenterteilung: **22.08.2012**
(21) Anmeldenummer: 10800893.9
(22) Anmeldetag: 29.12.2010
(51) Int. Cl.: C09D 133/00

(54) **WÄSSRIGE DISPERSIONSGRUNDIERUNG, DAMIT HERGESTELLTE BESCHICHTUNG SOWIE VERFAHREN ZUR HERSTELLUNG EINER DAMPFBREMSE BZW. EINER ZWISCHENSCHICHT AUF EINEM UNTERGRUND**
AQUEOUS DISPERSION BASE, COATING PRODUCED THEREWITH, AND METHODS FOR PRODUCING A VAPOR BARRIER OR AN INTERMEDIATE LAYER ON A SUBSTRATE
COUCHE DE FOND EN DISPERSION AQUEUSE, REVÊTEMENT FABRIQUÉ À PARTIR DE CETTE DERNIÈRE, AINSI QUE PROCÉDÉ DE FABRICATION D'UNE BARRIÈRE CONTRE LA VAPEUR D'EAU OU D'UNE COUCHE INTERMÉDIAIRE SUR UN SUBJECTILE

(30) Priorität: 02.02.2010 US 698248
(43) Veröffentlichungstag der Anmeldung: 21.09.2011
(73) Patentinhaber: Stauf Klebstoffwerk GmbH, 57234 Wilnsdorf (DE)
(72) Erfinder: GAHLMANN, Frank, 57271 Hilchenbach (DE)
(74) Vertreter: Pfenning, Meinig & Partner GbR
(86) Internationale Anmeldenummer: PCT/EP2010/007965
(87) Internationale Veröffentlichungsnummer: WO 2011/095202

(56) Entgegenhaltungen:
- EP-A1- 0 702 115

## Beschreibung

Die vorliegende Erfindung betrifft eine wässrige Dispersionsgrundierung, eine damit hergestellte Beschichtung eines Untergrundes sowie ein Verfahren zur Herstellung einer Wasserdampfbremse bzw. einer Zwischenschicht für einen Bodenbelag unter Verwendung der wässrigen Dispersionsgrundierung.

Derartige Dispersionsgrundierungen werden in der Fußbodentechnik eingesetzt, insbesondere auf zementären Untergründen.

Ein wesentlicher Faktor in der Fußbodentechnik und grundsätzlich bei der Belegung von zementären Untergründen ist der Feuchtegehalt des Untergrundes. Derartige Untergründe können beispielsweise aufgrund zu kurzer Trockenzeit oder auch aufgrund einer permanenten Feuchtequelle unterhalb des Untergrundes einen hohen Feuchtegehalt aufweisen. Derartige Untergründe sind beispielsweise Beton, Zement, Estriche oder Zementfließestriche.

Ein schadensfreier Aufbau einer Fußbodenkonstruktion bzw. eine schadensfreie Belegung eines derartigen Untergrundes mit weiteren Materialien kann hier nur erfolgen, wenn der Wassergehalt des Untergrunds im Gleichgewicht steht mit dem mittleren Raumklima (Gleichgewichtsfeuchte des Materials). Sollte dieser Gleichgewichtszustand zum Zeitpunkt des weiteren Fußbodenaufbaus infolge zu kurzer Trockenzeit noch nicht erreicht sein oder eine permanente Feuchtequelle unterhalb des Untergrundes vorhanden sein, kommt es bei der langfristigen Gleichgewichtseinstellung des Feuchtegehalts zur Wasserdampfdiffusion aus dem Untergrund in die Umgebungsluft. Dies ist so lange unproblematisch, wie der Untergrund nicht mit einem Bodenbelag abgedeckt ist oder nur Schichten mit einem sehr geringen Wasserdampfdiffusionswiderstand aufgebracht sind.

Bei den meisten Fußbodenaufbauten werden jedoch mehrere Schichten installiert, beispielsweise Grundierungen, Spachtelmassen, Klebstoffe, Folien, Bodenbeläge wie Parkett und zuletzt noch Oberflächenbehandlungsmittel, die jeweils zum Teil sehr hohe Wasserdampfdiffusionswiderstände besitzen. Dann muss bei mehrschichtigen Aufbauten die Schichtfolge so gewählt werden, dass der Wasserdampfdiffusionswiderstand der einzelnen Schichten mit zunehmender Entfernung von der Feuchtequelle abnimmt.

Bei den typischen Aufbauten und Schichtenfolgen in der Fußbodentechnik bedeutet dies in der Praxis, dass auf einem Untergrund mit einem erhöhten, nicht im Gleichgewichtszustand befindlichen Feuchtegehalt die Diffusionsrate von Wasserdampf aus dem Untergrund durch eine Grundierung mit wasserdampfdiffusionsbrem- - senden Eigenschaften (Wasserdampf-Diffusionsbremse) geringer sein muss als die Wasserdampfdiffusionsrate durch den darauf befindlichen Oberbelag.

Zur Lösung dieser bauphysikalischen Problematik werden im Stand der Technik spezielle Wasserdampfbremsgrundierungen auf unterschiedlicher Rohstoffbasis eingesetzt. Derartige Wasserdampfbremsgrundierungen dürfen jedoch nur auf zementären Untergründen, wie Zementestriche, Zementfließestriche oder Betone - aufgrund deren hydraulischen Eigenschaften und deren Wasserbeständigkeit - aufgebracht werden. Bei Calciumsufat oder Magnesitsystemen würde eine Beschichtung mit einer Wasserdampfbremse aufgrund der partiellen Wasserlöslichkeit der Materialien die Gefahr des Festigkeitsverlustes beinhalten.

Grundsätzlich wird der Diffusionsstrom an Wasserdampf aus dem zementären oder sonstigen Untergrund im Wesentlichen durch die folgenden drei Parameter bestimmt, nämlich:
die Vorratsmenge, also den absoluten Wassergehalt im Untergrund, der bestimmt wie lange ein Diffusionsprozess andauern kann und welche Gesamtmengen transportiert werden können;
das Potential, also die Konzentrations- oder Partialdruckdifferenz für Wasserdampf über dem Untergrund; und
die Transportwege, d.h. der Aufbau des Untergrundes sowie dessen Beschichtung.

Am weitesten verbreitet sind 2-komponentige Epoxidharz-Grundierungen (EP-Grundierungen, z.B. Stauf VEP-190), deren Harzkomponente in der Regel aus niedermolekularen Bisphenol A/F-Harzmischungen mit niedrigviskosen aliphatischen Glycidylethern als Reaktivverdünner besteht und die Härterkomponente aus einer Polyamin-/Polyamid-Mischung. Diese Epoxidharz-Grundierungen können lösemittelfrei oder lösemittelhaltig sein und zeichnen sich durch eine gute Penetration in den Untergrund und als Zweikomponenten-Materialien durch eine sichere Erhärtung durch chemische Reaktion in einer großen Bandbreite von Verarbeitungsumständen aus. Nachteilig ist vor allem das Gefährdungspotential beider Komponenten, das umfängliche Maßnahmen zum Schutz des Verarbeiters notwendig macht. Das Gefährdungspotential dieser EP-Grundierungen für Mensch und Umwelt lässt sich schon aus den notwendigen Gefahrstoffkennzeichnungen ableiten. So ist die Epoxidharz-Komponente in der Regel als reizend und umweltgefährlich mit den entsprechenden Warnhinweisen gekennzeichnet, die Amin-Härter-Komponente in der Regel mindestens als ätzend mit den entsprechenden Warnhinweisen. Ein anwendungstechnischer Nachteil von Epoxidharz-Grundierungen besteht darin, dass eine Haftung auf der durchgehärteten Grundierung nur sehr schwer zu erzielen ist. Die weiteren Komponenten des Fußbodenaufbaus wie Zwischengrundierungen, verschiedene Klebstoffarten oder mineralische Spachtelmassen erzielen keine ausreichende Haftung auf einer ausgehärteten EP-Grundierung. Um eine ausreichende Haftung sicher zu stellen, muss die EP-Grundierung zweilagig aufgetragen werden und dann die zweite Schicht mit großen Mengen Quarzsand abgestreut werden. Etwa die Hälfte des im Überschuss aufgestreuten Sands muss nach Durchhärtung entfernt und entsorgt werden. Die Haftung der weiteren Schichten erfolgt dann primär auf der Oberfläche der Sandkörner, die aus der Epoxidharzoberfläche herausragen.

Auch dem Stand der Technik entsprechend sind Polyurethan-Grundierungen, die in der Regel einkomponentig (1-K) sind und auf Diphenylmethandiisocyanat-Präpolymeren (MDI) basieren (z.B. Stauf VPU-155). Diese Grundierungen können ebenfalls lösemittelfrei oder lösemittelhaltig sein. Die Penetration in einen porösen Untergrund hängt vom Molekulargewicht des Präpolymers und dem Lösemittelgehalt ab. Sie ist bei 1-K-Polyurethan-Grundierungen in der Regel schlechter als bei 2-Komponenten-EP-Grundierungen. Die Verwendung von Lösemitteln im Innenausbau und damit auch in der Fußbodentechnik entspricht heute aber in weiten Teilen nicht mehr dem Stand der Technik. Bei den einkomponentigen Polyurethan-Grundierungen sind die Aushärtereaktionen und damit auch der Endzustand des sich bildenden Polymerfilms stark von den Umgebungsbedingungen abhängig, insbesondere der Raumtemperatur, der relativen Raumluftfeuchtigkeit, der Untergrundtemperatur und dem Wassergehalt des Untergrunds. Ein Problem stellt die unterschiedlich stark ausgeprägte CO₂-Entwicklung während der Härtungsreaktionen dar, die zu einem porösen Polymerfilm führt, was sowohl die mechanischen als auch die wasserdampfdiffusionsbremsenden Eigenschaften verschlechtert. Die MDI-basierten Polyurethangrundierungen stellen ein Gefahrenpotential für den Verarbeiter dar, das sich am einfachsten bereits an der Gefahrstoffkennzeichnung als gesundheitsschädlich, verbunden mit den entsprechenden Warnhinweisen ablesen lässt. Besonders kritisch ist das bekannte sensibilisierende Potential der Isocyanate. Die Haftung der weiteren Komponente eines Fußbodenaufbaus auf solchen PolyurethanGrundierungen ist ebenfalls problematisch. Mineralische Spachtelmassen erfordern zum Herstellen eines Haftverbunds wie bei den EP-Grundierungen ebenfalls das Absanden der Grundierungsoberfläche. Auch vor der Applikation von Klebstoffen ist oftmals eine Zwischengrundierung notwendig.

Die Bremswirkung auf die Wasserdampfdiffusion ist bei diesen einkomponentigen Polyurethangrundierungen tendenziell geringer als bei zweikomponentigen Expoxidharzgrundierungen, was u.a. auf die höhere Polarität und die Schaumstruktur des Polymerfilms zurückzuführen ist.

Ausgehend von diesem Stand der Technik war es Aufgabe der vorliegenden Erfindung, eine Grundierungsdispersion sowie eine damit hergestellte Grundierung als Wasserdampfbremse oder Zwischenhaftschicht zur Verfügung zu stellen, die auf den üblichen zementären oder sonstigen Untergründen mit hohem Feuchtegehalt eine ausreichend hohe Reduktion der Wasserdampfdiffusionsrate, eine breit gefächerte Zwischenschichthaftung für verschiedene Untergründe und verschiedene Beschichtungen des Fußbodenaufbaus aufweisen, die einfach aufzubringen sein soll und die insbesondere keine gesundheitlichen Risiken für den Verarbeiter besitzen soll. Weiterhin ist es Aufgabe der vorliegenden Erfindung, ein Verfahren zur Herstellung einer Wasserdampfbremse auf einem zementären Untergrund sowie ein Verfahren zur Verklebung eines Bodenbelags auf einem zementären und/oder sonstigen Untergrund mit den oben für die Dispersion angegebenen Zielsetzungen zur Verfügung zu stellen.

Diese Aufgabe wird durch die wässrige Dispersionsgrundierung nach Anspruch 1, die Beschichtung nach Anspruch 6, sowie die Verfahren nach den Ansprüchen 8 und 12 gelöst. Vorteilhafte Weiterbildungen der erfindungsgemäßen Dispersionsgrundierung, der erfindungsgemäßen Beschichtung sowie der erfindungsgemäßen Verfahren werden in den jeweiligen abhängigen Ansprüchen gegeben.

Erfindungsgemäß weist die wässrige Dispersionsgrundierung, die zur Weiterverarbeitung auf einem zementären und/oder sonstigen Untergrund vorgesehen ist, die folgenden Stoffe auf
a) ≥ 23 Gewichts-% silanisiertes Styrol-Acrylat-Copolymer und
b) ≥ 7,5 Gewichts-% Vinylidenchlorid-Acrylat-Copolymer und
c) ≥ 0,5 Gewichts-% Styrol-Butadien-Copolymer (SBR)-Paraffinwachs-Mischung und
d) ≥ 0,5 Gewichts-% Additive.
Insbesondere kann die wässrige Dispersionsgrundierung die folgenden Anteile an Komponenten aufweisen:
a) 27,5 bis 40 Gewichtsprozent eines silanisierten Styrol-Acrylat-Copolymers und/oder
b) 7,5 bis 17,5 Gewichtsprozent eines Vinylidenchlorid-Acrylat-Copolymers und/oder
c) 0,5 bis 5,5 Gewichtsprozent einer Mischung aus einem Styrol-Butadien-Copolymer mit einem Paraffinwachs und/oder
d) 47 bis 64 Gewichtsprozent Wasser und/oder
e) 0,5 bis 5 Gewichtsprozent Additive.

Eine derartige Dispersion zur Aufbringung als Grundierung auf zementäre oder sonstige Untergründe kann hergestellt werden, indem die folgenden Materialien zugegeben werden:
a) 55 bis 80 Gewichtsprozent einer silanisierten Styrolacrylatcopolymerdispersion, vorzugsweise 60 bis 75 Gewichtsprozent, vorteilhafterweise mit einem Wasseranteil von 50 Gewichts-%,
b) 15 bis 35 Gewichtsprozent einer Vinylidenchloridacrylatcopolymerdispersion, vorzugsweise 20 bis 30 Gewichtsprozent, vorzugsweise mit einem Wasseranteil von 50 Gewichts-%,
c) 1 bis 10 Gewichtsprozent einer Styrolbutadiencopoylmer-Paraffinwachs-Blenddispersion, vorzugsweise 2 bis 7 Gewichtsprozent, vorzugsweise mit einem Wasseranteil von 45 Gewichts-%,
d) 0 bis 10 Gewichtsprozent Wasser, vorzugsweise 2 bis 7 Gewichtsprozent und/oder
e) 0,5 bis 5 Gewichtsprozent Additive, vorzugsweise 1,5 bis 2,5 Gewichtsprozent,
wobei sich der Anteil der Komponenten a) bis e) in der fertigen Dispersionsformulierung zu ≤ 100 % aufsummieren.

Als Zusatzstoffe/Additive werden bevorzugt Emulgatoren, Konservierungsmittel, Entschäumer, Benetzungshilfsmittel, rheologische Additive, Antioxidantien, Filmbildehilfsmittel, basische Additive zur Einstellung des pH-Werts, pH-Puffer, Zinkoxid, Magnesiumoxid und/oder oberflächenaktive Substanzen eingesetzt.

Als entscheidende Vorteile der erfindungsgemäßen Grundierungsdispersion ergibt sich, dass mit ihr bei entsprechender Auftragsmenge, beispielsweise bei einem Auftrag von 500 bis 700 g/m² auf einem zementären Untergrund eine hervorragende Wasserdampfdiffusionsbremse oder -sperre erzeugt werden kann. Bei geringerem Auftrag, beispielsweise bei einem Auftrag von 100 bis 150 g/m² wird mittels der Dispersionsgrundierung eine hervorragende Zwischenschicht für einen Fußbodenaufbau hergestellt. Bei Verwendung der erfindungsgemäßen wässrigen Dispersionsgrundierung kann auf den heute oftmals notwendigen Schritt der Absandung verzichtet werden, wobei dennoch eine hervorragende Haftung der darauf aufgebrachten nächsten Lage der Bodenbeschichtung gegeben ist. Weitere Vorteile ergeben sich daraus, dass die wässrige Dispersionsgrundierung lösemittelfrei ist und weder nach dem internationalen GHS-System noch nach nationalen Gefahrstoffbestimmungen eine Gefahrenkennzeichnung trägt. Es handelt sich also im Gegensatz zu dem heute nach dem Stand der Technik üblicherweise eingesetzten Reaktionsharzsystemen auf Epoxid- oder Polyurethanbasis um ein für den Verarbeiter vollkommen ungefährliches Material.

Mit der erfindungsgemäßen wässrigen Dispersionsgrundierung kann eine erfindungsgemäße Untergrundbeschichtung hergestellt werden, mit der ein Fußbodenaufbau auf einem zementären Untergrund mit einem erhöhten, nicht dem Gleichgewichtszustand entsprechenden Feuchtegehalt schadensfrei möglich ist. Darüberhinaus ist, wie bereits oben erwähnt, an der erfindungsgemäßen Grundierung vorteilhaft, dass sie aufgrund ihrer spezifischen Zusammensetzung eine sehr gute Adhäsion an einer sehr großen Bandbreite von Substraten (Untergründen bzw. Klebstoffen und Spachtelmassen für Bodenbeläge) aufweist und sich somit sehr gut für das Erstellen der Zwischenhaftschicht in einem mehrlagigen Fußbodenaufbau eignet.

Die erfindungsgemäße Grundierung erfüllt weiterhin sämtliche Anforderungen an eine Grundierung und eine Wasserdampfbremse, nämlich
- gute Penetration in den Untergrund;
- Ausbildung eines stabilen Polymerfilms;
- Verfestigung des Untergrunds;
- gute Haftvermittlung;
- hohe Elektrolytstabilität der flüssigen Grundierung, die zur Verarbeitung eingesetzt wird;
- Verseifungsresistenz auf alkalischen (insbesondere zementären) Substraten (Untergründen); sowie
- Hydrophobie.

Die Grundierung kann auf allen in der Fußbodentechnik gängigen Untergründen eingesetzt werden: Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, abgesandeter Gussasphalt, Holz, Pressholz, Sperrholz, Gips, Gipsfaser, Gipskarton, Hartfaser oder mineralische Spachtelmasse. Die Grundierung erlaubt eine sehr gute Haftung zu allen weiteren in der Fußbodentechnik üblichen Komponenten im Schichtaufbau: Dispersionsklebstoffe auf Basis von Polyacrylat-Dispersionen, Dispersionsklebstoffe auf Basis von Polyvinylacetat-Dispersionen, Dispersionsklebstoffe auf Basis von Styrol-Butadien-Latex, Lösemittelklebstoffe (auf Basis von Polyvinylacetat oder Polyvinylether), 1-Komponenten Polyurethanklebstoffe, 2-Komponenten Polyurethanklebstoffe, Pulverklebstoffe auf Basis von Vinylacetat-Ethylen-Copolymer-Pulver mit reaktiver zementärer oder Calciumsulfat-Komponente, SMP-Klebstoffe, zementäre Spachtelmassen, Calciumsulfatspachtelmassen, Polyurethanspachtelmassen, Dispersionsspachtelmassen.

Daneben kann die Grundierung in einem definierten Zeitfenster, innerhalb dessen die noch reaktive Gruppen vorhanden sind (bis 72 Stunden), auch auf Epoxidharz- und Polyurethangrundierungen oder -dampfbremsen als Haftvermittler für den weiteren Schichtaufbau eingesetzt werden.

Werden die silanisierten Styrolacrylat-Polymere mit einer mittleren Teilchengröße kleiner als 150 nm eingesetzt, so gewährleistet diese geringe Teilchengröße eine besonders tiefgehende Penetration der Grundierung in die poröse Struktur eines zementären Untergrunds. Durch die gute Penetration kommt es nach Verfilmung zu einem effektiven Porenverschluss und damit zum Aufbau eines besonders großen Wasserdampfdiffusionswiderstands.

Wird als Additiv eine oberflächenaktive Substanz eingesetzt, so kann eine besonders hohe Elektrolytstabilität der Dispersionsgrundierung erzielt werden, die insbesondere für die Penetration in die zementären Strukturen hilfreich ist.

Mit einem hohen Styrolanteil im Styrolacrylat-Copolymer wird aufgrund der Hydrophobie des Styrols die wasserdampfdiffusionsbremsende Wirkung weiter verstärkt.

Wird die erfindungsgemäße Dispersionsgrundierung in einer Menge von 100 bis 150 g/m² auf einen Untergrund, z.B. mit einer Schaumstoffrolle aufgetragen, so ergibt sich nach dem Trocknen eine Schichtstärke im Bereich von 50 bis 75 µm, die bereits 30 Minuten nach dem Auftragen montagefest und für den weiteren Bodenaufbau bearbeitbar ist. Die so erzeugte Beschichtung besteht dann aus einem geschlossenen Polymerfilm, der sehr gut an allen in der Fußbodentechnik üblichen Klebstoffen und Spachtelmassen haftet.

Wird die erfindungsgemäße Dispersionsgrundierung in einer Menge von 500 bis 700 g/m², z.B. mit einem Zahnspachtel, aufgetragen, so ergibt sich nach dem Trocknen eine Schichtstärke im Bereich von 250 bis 350 µm, die spätestens zwei Stunden nach dem Auftragen montagefest und für den weiteren Bodenaufbau bearbeitbar ist. Die so erzeugte Beschichtung besteht dann aus einem geschlossenen Polymerfilm, der zusätzlich zu den vorteilhaften Haftungseigenschaften eine besonders hohe Sperrwirkung gegen Wasserdampf besitzt.

Die erfindungsgemäße wässrige Dispersionsgrundierung besitzt als Beschichtung auf einem Untergrund eine hohe Wasserbeständigkeit und Alkalibeständigkeit, die auf zementären Untergründen zwingend erforderlich ist. Die Beschichtung ist gegen Hydrolyse außerordentlich stabil.

Das Styrol-Acrylat-Copolymer bestimmt u.a. über seine Glasübergangstemperatur und die Polarität des Polymers die guten Haftungseigenschaften der erfindungsgemäßen Grundierung. Ein gutes Benetzungsverhalten wird sichergestellt, wenn oberflächenaktive Additive hinzugegeben werden. Die Haftung an weniger polaren Substraten wird insbesondere mit einem vorteilhafterweise hohen Anteil an Vinylidenchloridacrylatcopolymer sowie der Styrol-Butadien-Paraffinwachsmischung erzeugt.

Vorteilhafte Verbesserungen der erfindungsgemäßen wässrigen Dispersionsgrundierung ergeben sich, wenn der Gehalt an Festpolymeren in der verarbeitungsfertigen Dispersionsgrundierung zwischen 36 und 53 Gew.-% liegt. Es ist weiterhin vorteilhaft, wenn das Vinylidenchlorid-Acrylat-Copolymer mindestens 40 Gew.-% Chlor enthält. Vorteilhaft ist es weiterhin, wenn der Anteil an polymerisiertem Vinylidenchlorid am gesamten Polymer der Dispersionsgrundierung mindestens 14 Gew.-% beträgt.

Im Folgenden wird ein Beispiel einer erfindungsgemäßen wässrigen Dispersionsgrundierung gegeben.

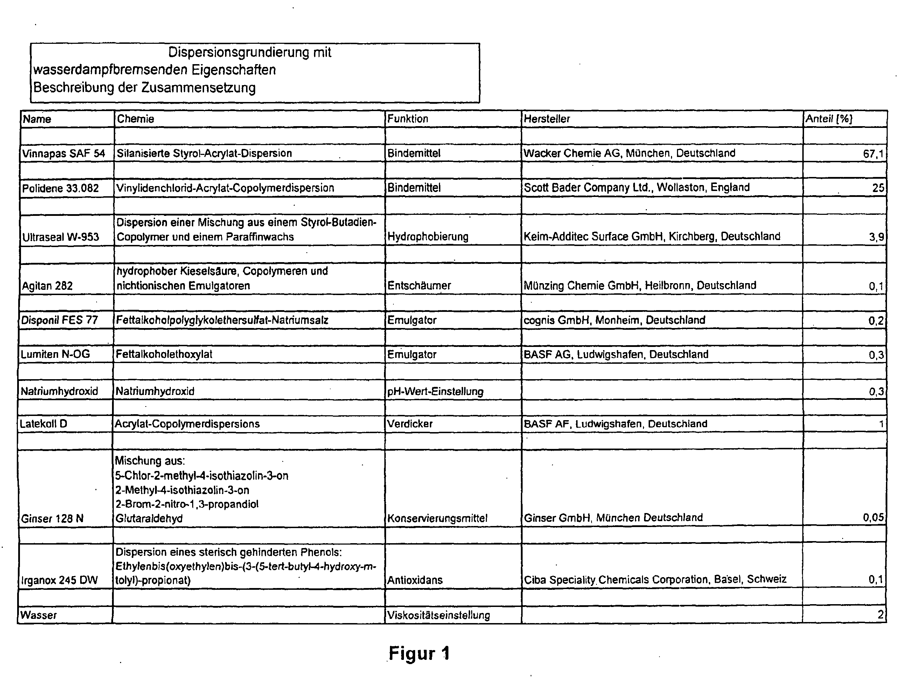

In der einzigen Figur 1 ist in einer Tabelle die Zusammensetzung einer erfindungsgemäßen Dispersionsgrundierung dargestellt.

Mit dieser wässrigen Dispersionsgrundierung wurde die Wasserdampfdurchlässigkeit auf einem zementären Untergrund mit eingestelltem Feuchtigkeitsgehalt bestimmt. Dazu wurde auf dem zementären Untergrund eine wasserdampfdiffusionsbremsende Beschichtung unter Verwendung der beispielhaften Dispersionsgrundierung (Figur 1) aufgebracht. Anschließend wurde die Effusion aus dem fünfseitig abgedichteten monolithischen zementären Untergrund durch die zu prüfende Beschichtung in den überstehenden Luftraum gemessen. Die Entwicklung der relativen Luftfeuchte im definierten überstehenden Luftraum wurde dazu mit Hilfe eines Hygrometers aufgezeichnet.
Für das Experiment wurde in ein quaderförmiges, nach oben offenes Versuchsgefäß mit einer Grundfläche von 30 x 30 cm und einer Höhe von 25 cm zunächst eine 5 cm dicke Schicht Zementestrich eingegossen und 72 Stunden aushärten gelassen. Der Wassergehalt des Estrichs betrug zu diesem Zeitpunkt 6,5 Gewichtsprozent. Anschließend wurde die beispielhafte Dispersionsgrundierung in einer Schichtstärke von 600 g/m² aufgetragen und 24 Stunden trocknen gelassen. Im Anschluss wurde ein Hygrometer in dem Probevolumen installiert und der Versuchsaufbau mit einem Deckel luftdicht verschlossen wurde (t₀). Nach 10 Stunden (t₁) wurde die sich einstellende relative Luftfeuchte gemessen. Die Umgebungstemperatur wurde während der gesamten Versuchsdauer auf 23°C, die umgebende Luftfeuchtigkeit auf 50% relative Feuchte konstant gehalten.
In einem Parallelexperiment wurde statt der beispielhaften Dispersionsgrundierung eine 1-K-Polyurethan-Grundierung (Stauf VPU-155) unter ansonsten identischen Versuchsbedingungen getestet.
Als Referenzwert dient die relative Luftfeuchte von 100%, die sich in einem vergleichbaren Versuchsaufbau ohne Beschichtung des Zementes einstellt.
Nach achtfacher Wiederholung der Messungen ergab sich eine relative Luftfeuchtigkeit zum Zeitpunkt t₁ von 68,2% ± 1,9% für die 1-K-Polyurethan-Grundierung und von 75,7% ± 2,2% für die beispielhafte Dispersionsgrundierung mit der Zusammensetzung gemäß Figur 1. Die Wasserdampfbremswirkung der 1-K-Polyurethan-Grundierung betrug somit 31,8 % (= 100% - 68,2%), die der beispielhaften Dispersionsgrundierung 24,3 % (= 100 % - 75,7 %).
Aus diesen Meßwerten ergibt sich, dass der Wasserdampfdiffusionswiderstand der beispielhaften Dispersionsgrundierung ca. 75 % des Wasserdampfdiffusionswiderstands der verwendeten 1-K-Polyurethangrundierung beträgt. Daraus leitet sich eine Praxiseignung der erfindungsgemäßen Dispersionsgrundierung bis zu einem Wassergehalt von rund 4,5 Gew.-% eines zementären Untergrundes ab.

Die beispielhafte erfindungsgemäße wässrige Dispersionsgrundierung eignet sich also zur Herstellung einer Haftvermittlungsschicht, Zwischenschicht bzw. Wasserdampfdiffusionsbremsschicht auf jeder Art von Untergründen, insbesondere auf zementären Untergründen.

Eine vorteilhafte Verbesserung der erfindungsgemäßen verarbeitungsfertigen wässrigen Dispersionsgrundierung ergibt sich, wenn der Anteil an polymerisiertem Vinylidenchlorid am Vinylidenchlorid-Acrylat-Copolymer mindestens 60 Gewichtsprozent beträgt.

Eine weitere vorteilhafte Ausprägung der erfindungsgen verarbeitungsfertigen wässrigen Dispersionsgrundierung entsteht, wenn das Paraffinwachs in der Mischung mit dem Styrol-Butadien-Copolymer ein Hart-Paraffinwachs ist.

Weiterhin vorteilhaft für die erfindungsgemäße verarbeitungsfertige wässrige Dispersionsgrundierung ist, wenn das Additiv ein Emulgator, ein Konservierungsmittel, ein Entschäumer, ein Benetzungshilfsmittel, ein Verdicker, ein Antioxidans, ein Filmbildehilfsmittel, eine Base, ein pH-Puffer, eine oberflächenaktive Substanz, Zinkoxid, Magnesiumoxid oder eine Kombination dieser Bestandteile ist.

Für die Herstellung einer Wasserdampfbremse ist von Vorteil, dass die erfindungsgemäße verarbeitungsfertige wässrige Dispersionsgrundierung auf zementäre und/oder sonstige Untergründe aufgetragen wird, deren Wassergehalt bis zu 4,5 Gewichtsprozente beträgt.

Für die Herstellung einer Wasserdampfbremse und den weiteren Schichtaufbau weiterhin vorteilhaft ist, dass die zementären und/oder sonstigen Untergründe nach Auftrag der erfindungsgemäßen verarbeitungsfertigen wässrigen Dispersionsgrundierung nicht abgesandet werden müssen.

Ferner ist auch für die Herstellung einer Zwischenhaftschicht zur Verklebung eines Bodenbelags vorteilhaft, dass die zementären und/oder sonstigen Untergründe nach Auftrag der erfindungsgemäßen verarbeitungsfertigen wässrigen Dispersionsgrundierung nicht abgesandet werden müssen.

## Patentansprüche

1. Wässrige Dispersionsgrundierung auf Polymerbasis für zementäre und/oder sonstige Untergründe, **dadurch gekennzeichnet, dass** sie in einer wässrigen Dispersion die folgenden Stoffe enthält:
a) ≥ 20 Gewichts-% silanisiertes Styrol-Acrylat-Copolymer und
b) ≥ 7,5 Gewichts-% Vinylidenchlorid-Acrylat-Copolymer und
c) ≥ 0,5 Gewichts-% Styrol-Butadien-Copolymer-Paraffinwachs-Mischung und
d) ≥ 0,5 Gewichts-% Additive,
wobei sich die Prozentangaben auf die Masse der verarbeitungsfertigen Dispersionsgrundierung beziehen.

2. Wässrige Dispersionsgrundierung nach Anspruch 1, **dadurch gekennzeichnet, dass** sie die folgenden Stoffe enthält oder aus ihnen besteht:
a) 27,5 bis 40 Gewichtsprozent eines silanisierten Styrol-Acrylat-Copolymers und/oder
b) 7,5 bis 17,5 Gewichtsprozent eines Vinylidenchlorid-Acrylat-Copolymers und/oder
c) 0,55 bis 5,5 Gewichtsprozent einer Mischung aus einem Styrol-Butadien-Copolymer mit einem Paraffinwachs und/oder
d) 47 bis 64 Gewichtsprozent Wasser und/oder
e) 0,5 bis 5 Gewichtsprozent Additive,
wobei sich die Prozentangaben auf die Masse der verarbeitungsfertigen Dispersionsgrundierung beziehen und die Summe der Bestandteile a) bis e) ≤ 100% beträgt.

3. Wässrige Dispersionsgrundierung nach Anspruch 1, **dadurch gekennzeichnet, dass** die mittlere Teilchengröße der silanisierten Styrol-AcrylatCopolymere kleiner als 150 nm ist.

4. Wässrige Dispersionsgrundierung nach Anspruch 1, **dadurch gekennzeichnet, dass** die silanisierte Styrol-Acrylat-Copolymerdispersion während der Trocknung bei Raumtemperatur mit sich selbst vernetzbar ist.

5. Wässrige Dispersionsgrundierung nach Anspruch 1, **dadurch gekennzeichnet, dass** keine organischen Lösemittel enthalten sind.

6. Beschichtung eines zementären und/oder sonstigen Untergrundes,
**dadurch gekennzeichnet, daß**
sie die folgenden Stoffe enthält:
a) ≥ 45 Gewichts-% silanisiertes Styrol-Acrylat-Copolymer und
b) ≥ 14 Gewichts-% Vinylidenchlorid-Acrylat-Copolymer und
c) ≥ 1 Gewichts-% Styrol-Butadien-Copolymer (SBR)-Paraffinwachs-Mischung und
d) ≥ 1 Gewichts-% Additive.

7. Beschichtung nach Anspruch 6, **dadurch gekennzeichnet, daß**
sie die folgenden Stoffe enthält oder aus ihnen besteht:
a) 51,9 bis 79,5 Gewichtsprozent eines silanisierten Styrol-Acrylat-Copolymers und/oder
b) 14,2 bis 34,8 Gewichtsprozent eines Vinylidenchlorid-Acrylat-Copolymers und/oder
c) 1 bis 10,8 Gewichtsprozent einer Mischung aus einem Styrol-Butadien-Copolymer mit einem Paraffinwachs und/oder
d) 1 bis 9,5 Gewichtsprozent Additive.

8. Verfahren zur Herstellung einer Wasserdampfbremse auf einem zementären und/oder sonstigen Untergrund,
**dadurch gekennzeichnet, dass** eine wässrige Dispersionsgrundierung gemäß einem der Ansprüche 1 bis 5 auf den zementären Untergrund aufgetragen wird.

9. Verfahren nach Anspruch 8, **dadurch gekennzeichnet, dass** der zementäre Untergrund Beton, Zement, Zementestrich, Zementfließestrich oder Zementmörtel ist.

10. Verfahren nach Anspruch 8, **dadurch gekennzeichnet, dass** die Auftragsmenge 500 bis 700 g/m² beträgt.

11. Verfahren nach Anspruch 8, **dadurch gekennzeichnet, dass** bei gleicher Auftragsmenge an Polymer der Wasserdampfdiffusionswiderstand der getrockneten Grundierungsschicht ca. 75% des Wasserdampfdiffusionswiderstandes einer üblichen EinKomponenten-Polyurethangrundierung entspricht.

12. Verfahren zur Verklebung eines Bodenbelags auf einem zementären und/oder sonstigen Untergrund, **dadurch gekennzeichnet, d a s s**
vor der Verklebung des Bodenbelages eine wässrige Dispersionsgrundierung gemäß einem der Ansprüche 1 bis 5 als Zwischenhaftschicht und/oder als Wasserdampfbremse auf den Untergrund aufgetragen wird.

13. Verfahren nach Anspruch 12, **dadurch gekennzeichnet, dass** der Untergrund Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, abgesandeter Gussasphalt, Holz, Pressholz, Sperrholz, Gips, Gipsfaser, Gipskarton, Hartfaser oder mineralische Spachtelmasse ist.

14. Verfahren nach Anspruch 12, **dadurch gekennzeichnet, dass** die Auftragsmenge 100 bis 150 g/m² beträgt.

15. Verfahren nach Anspruch 12, **dadurch gekennzeichnet, dass** für den Aufbau eines Bodenbelages auf der Dispersionsgrundierung eines der folgenden Materialien allein oder in Kombination verwendet wird: Holz, Keramik, PVC, Linoleum, Gummi, Kork, textiles, faserartiges oder elastisches Material.

## Claims

1. Aqueous dispersion primer based on a polymer for cement and/or other subfloors,
***characterised in that***
it contains in an aqueous dispersion the following materials:
a) ≥ 20% by weight of silanised styrene-acrylate copolymer and
b) ≥ 7.5% by weight of vinylidene chloride-acrylate copolymer and
c) ≥ 0.5% by weight of styrene-butadiene copolymer-paraffin wax mixture and
d) ≥ 0.5% by weight of additives,
the percentage data relating to the mass of the dispersion primer, ready for handling.

2. Aqueous dispersion primer according to claim 1,
**characterised in that** it contains the following materials or comprises them:
a) 27.5% to 40% by weight of a silanised styrene-acrylate copolymer and/or
b) 7.5% to 17.5% by weight of a vinylidene chloride-acrylate copolymer and/or
c) 0.5% to 5.5% by weight of a mixture of a styrene-butadiene copolymer with a paraffin wax and/or
d) 47% to 64% by weight of water and/or
e) 0.5% to 5% by weight of additives,
the percentage data relating to the mass of the dispersion primer, ready for handling, and the sum of the components a) to e) being ≤ 100%.

3. Aqueous dispersion primer according to claim 1, **characterised in that** the average particle size of the silanised styrene-acrylate copolymer is less than 150 nm.

4. Aqueous dispersion primer according to claim 1, **characterised in that** the silanised styrene-acrylate copolymer dispersion can be crosslinked with itself during drying at room temperature.

5. Aqueous dispersion primer according to claim 1, **characterised in that** no organic solvents are contained.

6. Coating of a cement and/or other subfloor,
***characterised in that***
it contains the following materials:
a) ≥ 45% by weight of silanised styrene-acrylate copolymer and
b) ≥ 14% by weight of vinylidene chloride-acrylate copolymer and
c) ≥ 1% by weight styrene-butadiene copolymer-paraffin wax mixture and
d) ≥ 1% by weight of additives.

7. Coating according to claim 6, **characterised in that** it contains the following materials or comprises them:
a) 51.9% to 79.5% by weight of a silanised styrene-acrylate copolymer and/or
b) 14.2% to 34.8% by weight of a vinylidene chloride-acrylate copolymer and/or
c) 1% to 10.8% by weight of a mixture of a styrene-butadiene copolymer with a paraffin wax and/or
d) 1% to 9.5% by weight of additives.

8. Method for producing a water vapour barrier on a cement and/or other subfloor,
***characterised in that***
an aqueous dispersion primer according to one of the claims 1 to 5 is applied on the cement subfloor.

9. Method according to claim 8, **characterised in that** the cement subfloor is concrete, cement, cement screed, cement flow screed or cement mortar.

10. Method according to claim 8, **characterised in that** the application quantity is 500 to 700 g/m².

11. Method according to claim 8, **characterised in that**, with the same application quantity of polymer, the water vapour diffusion resistance of the dried primer layer corresponds to approx. 75% of the water vapour diffusion resistance of a normal one-component polyurethane primer.

12. Method for gluing a floor covering on a cement and/or other subfloor,
***characterised in that***
before gluing of the floor covering, an aqueous dispersion primer according to one of the claims 1 to 5 is applied as intermediate adhesion promotion layer and/or as water vapour barrier on the subfloor.

13. Method according to claim 12, **characterised in that** the subfloor is concrete, cement, cement screed, cement flow screed, cement mortar, cement-bonded wood fibre, ceramics, natural stone, calcium sulphate screed, calcium sulphate flow screed, magnesite screed, sanded asphalt mastic, wood, fibreboard, plywood, gypsum, gypsum fibreboard, gypsum plasterboard, hardboard or mineral levelling compound.

14. Method according to claim 12, **characterised in that** the application quantity is 100 to 150 g/m².

15. Method according to claim 12, **characterised in that** for the construction of a floor covering on the dispersion primer of one of the following materials there is used alone or in combination:
wood, ceramics, PVC, linoleum, rubber, cork, textile, fibrous or elastic material.

## Revendications

1. Couche de fond en dispersion aqueuse à base de polymères, destinée à des subjectiles cimentaires et/ou autres, **caractérisée en ce qu'**elle contient les substances suivantes dans une dispersion aqueuse :
a) ≥ 20 % en poids de copolymère styrène-acrylate silanisé, et
b) ≥ 7,5 % en poids de copolymère chlorure de vinylidène-acrylate, et
c) ≥ 0,5 % en poids d'un mélange de copolymère styrène-butadiène et de cire de paraffine, et
d) 0,5 % en poids d'additifs,
dans laquelle les indications de pourcentages font référence à la masse de la couche de fond en dispersion prête à la transformation.

2. Couche de fond en dispersion aqueuse selon la revendication 1, **caractérisée en ce qu'**elle contient, ou est constituée par, les substances suivantes :
a) 27,5 à 40 % en poids d'un copolymère styrène-acrylate silanisé, et/ou
b) 7,5 à 17,5 % en poids d'un copolymère chlorure de vinylidène-acrylate, et/ou
c) 0,55 à 5,5 % en poids d'un mélange d'un copolymère styrène-butadiène avec une cire de paraffine, et/ou
d) 47 à 64 % en poids d'eau, et/ou
e) 0,5 à 5 % en poids d'additifs,
dans laquelle les indications de pourcentages font référence à la masse de la couche de fond en dispersion prête à la transformation et la somme des constituants a) à e) est ≤ 100%.

3. Couche de fond en dispersion aqueuse selon la revendication 1, **caractérisée en ce que** les particules du copolymère styrène-acrylate silanisé ont une taille moyenne inférieure à 150 nm.

4. Couche de fond en dispersion aqueuse selon la revendication 1, **caractérisée en ce que** la dispersion de copolymère styrène-acrylate silanisé est autoréticulable pendant le séchage à température ambiante.

5. Couche de fond en dispersion aqueuse selon la revendication 1, **caractérisée en ce qu'**elle ne contient pas de solvants organiques.

6. Revêtement d'un subjectile cimentaire et/ou autre, **caractérisé en ce qu'**il contient les substances suivantes :
a) ≥ 45 % en poids de copolymère styrène-acrylate silanisé, et
b) ≥ 14 % en poids de copolymère chlorure de vinylidène-acrylate, et
c) ≥ 1 % en poids d'un mélange de copolymère styrène-butadiène (SBR) et de cire de paraffine, et
d) ≥ 1 % en poids d'additifs.

7. Revêtement selon la revendication 6, **caractérisé en ce qu'**il contient, ou est constitué par, les substances suivantes :
a) 51,9 à 79,5 % en poids d'un copolymère styrène-acrylate silanisé, et/ou
b) 14,2 à 34,8 % en poids d'un copolymère chlorure de vinylidène-acrylate, et/ou
c) 1 à 10,8 % en poids d'un mélange d'un copolymère styrène-butadiène avec une cire de paraffine, et/ou
d) 1 à 9,5 % en poids d'additifs.

8. Procédé de fabrication d'une barrière contre la vapeur d'eau sur un subjectile cimentaire et/ou autre, **caractérisé en ce qu'**une couche de fond en dispersion aqueuse selon l'une des revendications 1 à 5 est déposée sur le subjectile cimentaire.

9. Procédé selon la revendication 8, **caractérisé en ce que** le subjectile cimentaire est du béton, du ciment, une chape en ciment, une chape fluide en ciment ou un mortier de ciment.

10. Procédé selon la revendication 8, **caractérisé en ce que** la quantité déposée va de 500 à 700 g/m².

11. Procédé selon la revendication 8, **caractérisé en ce que**, à quantité déposée de polymère égale, la résistance à la diffusion de la vapeur d'eau de la couche de fond une fois séchée correspond à environ 75 % de la résistance à la diffusion de la vapeur d'eau d'une couche de fond monocomposant classique en polyuréthane.

12. Procédé de collage d'un revêtement de sol sur un subjectile cimentaire et/ou autre, **caractérisé en ce que**, avant le collage du revêtement de sol, une couche de fond en dispersion aqueuse selon l'une des revendications 1 à 5 est déposée sur le subjectile en tant que couche intermédiaire adhésive et/ou en tant que barrière contre la vapeur d'eau.

13. Procédé selon la revendication 12, **caractérisé en ce que** le subjectile est du béton, du ciment, une chape en ciment, une chape fluide en ciment, du mortier de ciment, des fibres de bois liées par du ciment, de la céramique, de la pierre naturelle, une chape à base de sulfate de calcium, une chape fluide à base de sulfate de calcium, une chape à base de magnésite, de l'asphalte coulé sablé, du bois, de l'aggloméré, du contreplaqué, du plâtre, du staff, du placoplâtre, des fibres dures ou un mastic minéral.

14. Procédé selon la revendication 12, **caractérisé en ce que** la quantité déposée va de 100 à 150 g/m².

15. Procédé selon la revendication 12, **caractérisé en ce que**, pour la pose d'un revêtement de sol sur la couche de fond en dispersion, l'un des matériaux suivants est utilisé seul ou en combinaison : bois, céramique, PVC, linoleum, caoutchouc, liège, matériau textile, fibreux ou élastique.
